# EUROPEAN PATENT SPECIFICATION

(11) **EP 1 107 412 B1**
(45) Date of publication and mention of the grant of the patent: **18.11.2009**
(21) Application number: 00311026.9
(22) Date of filing: 11.12.2000
(51) Int. Cl.: H02G 3/30

(54) **Fastening device**
Befestigungsvorrichtung
Dispositif d'attache

(30) Priority: 11.12.1999 GB 9929258
(43) Date of publication of application: 13.06.2001
(73) Proprietor: LEGRAND ELECTRIC LIMITED (reg.no. 115834), Birmingham B19 2LF (GB)
(72) Inventor: Gregory, Edwin Stewart, Scarborough WO11 3AR (GB)
(74) Representative: Evans, Marc Nigel

(56) References cited:
- DE-U- 9 016 023
- US-A- 5 100 086

## Description

The invention relates to a fastening device for securing tray-like objects to tubular or channel sectioned support means of the type commonly used to support cable trays.

Although the following description refers almost exclusively to a fastening device for fastening a cable tray to a channel-sectioned support, it will be appreciated by persons skilled in the art that the invention can function equally well as a fastening device for securing a shelf or tray to any partially tubular support means.

Channel supports are commonly used to support mechanical and electrical fixtures in buildings. Said supports are typically formed from commonly available channel sections having a pair of generally parallel flanges joined by a web. The uppermost edge of each flange is bent downwardly internally of the channel to provide the channel with secondary flanges depending downwardly within the channel from the uppermost edges of the flange to define a slot extending the length of the support. The support is secured to a wall or ceiling of a building or surface of a construction. The support is generally horizontally secured to the wall or ceiling in cantilever manner but can be disposed either with the supporting upper edges of the channel in a horizontal plane to support a horizontally orientated cable tray disposed thereon or said edges can be disposed in a vertical plane so that a vertically disposed cable tray can be secured thereto. Other dispositions of channel supports are common and will be appreciated by the skilled person.

Cable trays used for containing and locating electricity cables in buildings are typically fastened to channel supports using bolts having a suitable formation at one end to receive an upper edge of a cable tray and which are fed through apertures in the web of the channel support and pass through a nut disposed within the channel and behind the secondary flanges thereof.

A problem with the above method of attaching a tray to channel supports is that the nuts and bolts are relatively expensive to manufacture and they require the use of tools to fit the same. The conventional method of fitting the tray to channel supports may require the tray to be lifted which is difficult since there is often little space between the cable tray to be fitted, the channel support and a wall. Thus there is limited space for a user to manoeuvre and be able to align the tray with the tubular support and to screw and/or unscrew the same to or from each other. As a result, fitting an object to a tubular support can be a time consuming and problematic task.

Documents US-A-55100086 and DE-U-9016023 disclose a fastening device according to the prior art.

It is an object of the present invention to provide a fastening device for attaching an object to tubular support which can be fitted easily and quickly and which does not require the use of tools.

It is a further object of the present invention to provide a fastening device which can be used with both horizontal and vertical orientated tubular support.

According to the present invention there is provided a fastening device for securing a tray to support means, said support means having a cross-sectional shape defining a hollow channel within said support means and along its length, said support means having portions extending inwardly of said channel to partially close said channel in an upper region thereof, thereby firstly defining a slot along the length of said support and secondly providing edges internally of said channel behind which said device can be engaged, said tray comprising at least a base connected to side walls having upper edges to which said device can be secured, characterised in that said fastening device is a unitary component having first and second engagement means, first engagement means in use being disposed over the upper edge of said tray and said second engagement means contacting the internal edges of said channel.

Preferably, the first and second engagement means are separated from one another by a distance less than that between the upper edge of the tray and the plane containing the internal edges of the channel, such that the device is snap-fittable between the support and the upper edge of the tray with some elastic deformation of one or other of said engagement means.

Preferably the fastening device is made from spring metal, preferably steel.

Preferably the first engagement means is separated from the second engagement means by a body portion whose length is marginally less than the depth of the tray side walls plus the distance between the upper edges of the support and the internal surfaces of the inwardly extending portions with which the second engagement means come into contact.

The length of the body portion is determined by the cross-sectional shape of the support and the depth of the tray which is to be secured thereto.

The thickness of the device can be of the order of 0.5-5mm and preferably the thickness of the device is between 0.6 to 1.2mm.

Preferably, the device comprises a base portion and a body portion which extends upwardly away therefrom and terminates in a curled portion defining a rim beneath which the upper edge of a tray can be secured. The underside of said rim constitutes the first engagement means.

In one embodiment at least one protrusion or barb is provided on the underside of the rim to aid the engagement of the device with the upper edge of the side wall of the tray.

Preferably the tip of the barb or protrusion points towards the base portion of the device.

Preferably the base portion is of marginally lesser width than the hollow channel into which it is inserted by first substantially aligning the base portion in parallel fashion with the length of the support and disposing said base portion within said channel and then twisting said device to bring said base portion into substantially perpendicular relationship with the length of said support.

Preferably the base portion is wider than the body portion allowing for the provision of tab portions bent outwardly of the plane of the body and base portion. The uppermost edges of said tab portions constitute the second engagement means and come into contact with the internal edges of the inwardly extending portions of the channel as the first engagement means are disposed over the edge of a tray on the support. The tab portions are further elastically deflected outwardly of the plane of the base and body portions of the device and thus the tray edge is springingly secured to the support.

Said tab portions can be bent in the same direction out of the plane of base and body portions, or in opposite directions.

In one embodiment, tab portions are not provided, and the upper edges of the areas of the base portion extending beyond the width of the body portion constitute the second engagement means

Preferably the rim of the device is provided with a lip to allow a user to grip and lever the device to allow the device to fitted and removed as frequently as required.

Preferably the lines of contact made between the underside of the rim which constitutes the first engagement means with the upper edge of the tray, and between the upper edges of the tab portions which constitute the second engagement means and the internal edges of the inwardly extending portions of the channel are substantially parallel, although any desired angle betwixt the two may be chosen.

In one embodiment, in use, two fastening devices are used to attach the tray to the channel support such that one device engages with the upper edge of each side wall.

The fastening device is fitted by locating the first end of the device in the tubular support and twisting the device such that the first engagement means engage with the flanges on the tubular support. The second engagement means is then hooked over the upper edge of a side wall of the tray. In a further aspect of the invention, the method of securing a fastening device as described above is also covered by this application.

The fastening device can be formed as a planar metal blank and the required portions can be bent outwardly from the planar surface to form the first and second engagement means of the device.

The present invention concerns also a method of forming a fastening device according to claim 17, a method of attaching a fastening device to a tray according to claim 18 and a method of attaching a tray to channel support means using a fastening device according to claim 20.

An advantage of the present invention is that the fastening device can be fitted both quickly and easily and does not require any tools. A further advantage is that since the device can be simply clipped onto the tray and the channel support, the device can be used for fastening of both horizontal and vertically orientated trays. The fastening device firmly secures the tray to the support such that the tray does not move around.

Embodiments of the present invention will now be described with reference to the following Figures wherein:
Figure 1 is a perspective view of a fastening device according to an embodiment of the present invention;
Figure 2 is a perspective view of a cable tray secured to a channel support by the fastening device of Figure 1;
Figure 3a is a front view of a fastening device according to a further embodiment of the invention, with the curl portion omitted;
Figure 3b is an enlarged view of the barb in Figure 3a;
Figure 3c is a side view of the device in Figure 3a; and
Figure 3d is a front view of the device in Figure 3a with the curl portion.

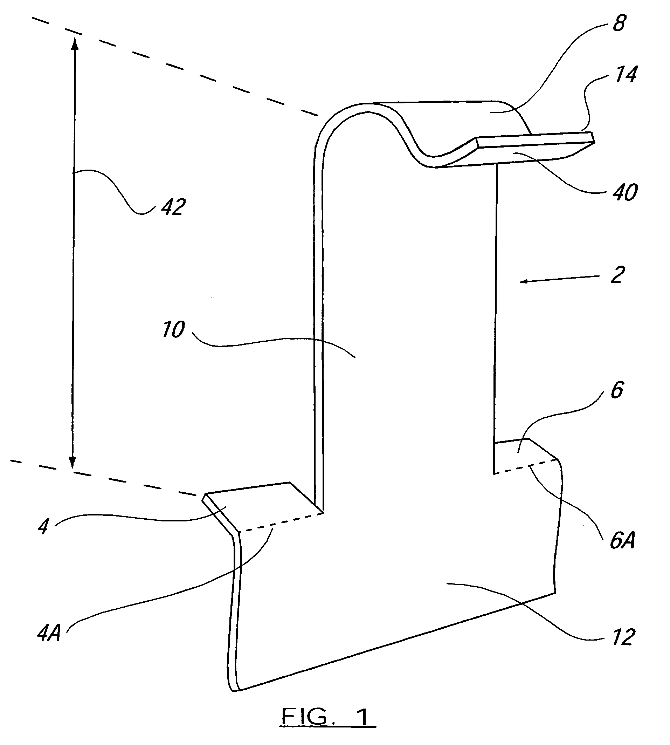

Referring to Figure 1, there is illustrated a fastening device 2 having engagement means in the form of tab portions 4 and 6 and having further engagement means in the form of a curled portion 8 defining a rim of the device. Said engagement means form an integral part of the device, being a single component, and are integrally formed with a body portion 10 which extends upwardly away from a base portion 12 which is wider. Tab portions 4, 6 are deflected out of the plane containing body and base portions 10, 12 and are provided at either end of the base portion 12. They are deflected outwardly along bend lines 4A, 6A and any further deflection of said tab portions outwardly gives rise to a restoring moment about said bend lines 4A, 6A. It is noted that tab portions could also be deflected inwardly or alternatively inwardly and outwardly along bend lines 4A and 6A to provide a similar effect.

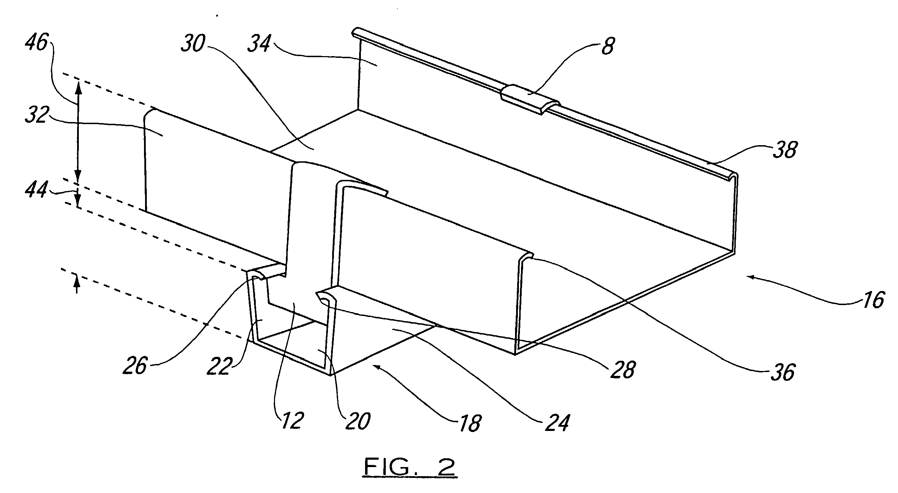

Referring to Figure 2, there is illustrated fastening devices having curled portions 8 being used to secure a cable tray 16 to a support 18 having a channel section as described below.

Support 18 comprises a base 20 and side walls 22 and 24. The uppermost edge of side walls 22 and 24 is bent inwardly to form flanges 26 and 28, which together define a slot along the length of the support through which fastening devices can be inserted with their base portions running generally parallel to said slot. Said flanges 26, 28 also provide an internal contact edge against which the uppermost edges of said tab portions 4, 6 can engage after the devices have been twisted through 90° within the channel.

Cable tray 16 comprises a base 30 and side walls 32 and 34 extending therefrom.

In use, the base portion 12 of the fastening device 2 is placed into the tubular support 18 and twisted through 90° such that tab portions 4 and 6 of the device engage with the internal surface of flanges 26 and 28 respectively. The curled portion 8 is placed over the upper edges 36 and 38 of side walls 32 and 34 respectively of the cable tray 16. There are typically two fastening devices used at each attachment point such that a hook-like protrusion engages with the upper edge of each side wall of the tray.

The fastening device 2 is made from spring steel or other suitable metal to give the device a suitable degree of resilience and flexibility.

The curled portion 8 is provided with a lip 40 having an upper edge 14 to allow a user to grip or lever the curled portion 8 of the device 2 over the uppermost edges 36, 38 of the cable tray thus enabling the device to be fitted and removed as frequently as required. In addition, two or more hook-like protrusions can be provided per fastening device.

The distance axially of the device between the underside of the curled portion 8 and the uppermost edges of the tab portions 4, 6 as shown at 42 in Figure 1 is ideally marginally less than the combined depth of a side wall 32 of the tray 16 plus the distance between the upper surfaces of the support 18 and the surface or edge with which the tab portions make contact, as shown at depths 46, 44 respectively. In such circumstances, as the curled portion 8 of the device is levered over the upper edge 36 of a cable tray side wall, the tab portions come into contact with the internal edges of the flanges 26, 28 and are elastically slightly deflected outwardly. This outward deflection gives rise to a restoring moment about bend lines 4A, 6A which in turn axially tensions the body portion 10 between the curled portion 8 and said tab portions 4, 6. It is this effect which causes the secure and springing attachment of the cable tray to the support.

The body portion can be lengthened or shortened accordingly to accommodate different sized cable trays and/or channel supports.

The fastening device can be made from spring steel but an alternative resilient flexible material could also be used, e.g. a suitable plastics material.

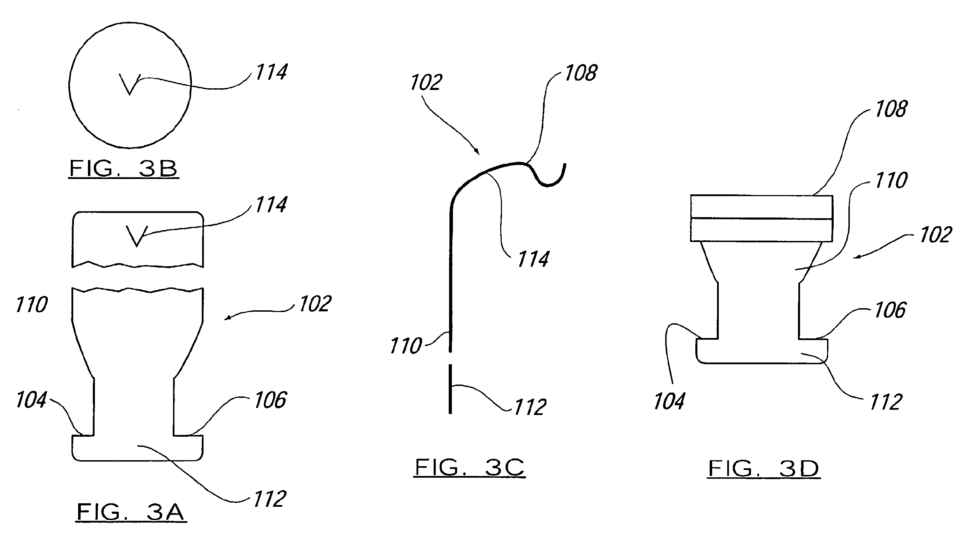

In accordance with a further embodiment of the present invention, there is provided a fastening device 102 having engagement means in the form of edges 104 and 106. Further engagement means in the form of a curled portion 108 are provided which define a rim of the device, as shown in Figures 3a-3d.

As in the previously described embodiment, the engagement means form an integral part of the device which further includes a body portion 110 extending upwardly from a base portion 112 which is wider.

The device shown in figures 3a-3d functions in a similar manner to the device shown in figures 1 and 2, with the edges 104 and 106, in use, engaging with the underside surface of flanges of a support.

A barb 114 is provided on the underside surface of the rim of the curled portion 108, with the tip of the barb pointing towards the base portion 112. The barb 114 engages with the upper edges of the side walls of a cable tray, to further aid attachment of the fastening device to the tray.

The barb 114 is integrally formed with the device and it is noted that a number of barbs can be provided on the device if required.

The fastening device 102 is provided with a lip 140 and can be fitted and removed from the tray and support as frequently as is required.

Thus there is provided a fastening device which can be fitted quickly and easily by hand without the requirement for any tools.

## Claims

1. A fastening device (2; 102) for securing a tray (16) to support means (18), said support means (18) having a cross-sectional shape defining a hollow channel within said support means and along its length, said support means (18) having portions (26, 28) extending inwardly of said channel to partially close said channel in an upper region thereof, thereby firstly defining a slot along the length of said support and secondly providing edges internally of said channel behind which said device can be engaged, said tray (16) comprising at least a base (30) connected to side walls (32, 34) having upper edges (36, 38) to which said device (2; 102) can be secured, **characterised in that** the fastening device (2; 102) is a unitary component having first and second engagement means, first engagement means in use being disposed over the upper edge (36; 38) of said tray and said second engagement means contacting the internal edges of said channel.

2. A fastening device according to claim 1 **characterised in that** the first and second engagement means are separated from one another by a distance less than that between the upper edge (36; 38) of the tray (16) and the plane containing the internal edges of the channel, such that the device (2; 102) is snap fittable between the support (18) and the upper edge (36; 38) of the tray (16) with some elastic deformation of one and/or other of said engagement means.

3. A fastening device according to claim 2 **characterised in that** the first engagement means is separated from the second engagement means by a body portion (10; 110) which is marginally less than the depth of the tray side walls (32, 34) plus the distance between the upper edges and the internal edges of the inwardly extending portions (26, 28) of the support (18) with which the second engagement means engages therewith.

4. A fastening device according to claim 1 **characterised in that** the device (2; 102) comprises a base portion (12; 112) and a body portion (10; 110) which extends upwardly therefrom and terminates in a curled portion (8; 108) defining a rim constituting the first engagement means beneath which the upper edge (36; 38) of the tray (16) can be secured.

5. A fastening device according to claim 4 **characterised in that** the rim of the device (2; 102) is provided with a lip (40; 140).

6. A fastening device according to claim 4 **characterised in that** at least one protrusion or barb (114) is provided on the underside of the rim.

7. A fastening device according to claim 4 **characterised in that** the base portion (12; 112) is of marginally lesser width than the hollow channel into which it is inserted.

8. A fastening device according to claim 4 **characterised in that** the base portion (12; 112) is wider than the body portion (10; 110).

9. A fastening device according to claim 8 **characterised in that** the upper edges of the base portion (12; 112) extending beyond the width of the body portion (10; 110) constitute the second engagement means.

10. A fastening device according to claim 9 **characterised in that** the edges of the base portion (12; 112) extending beyond the width of the body portion (10; 110) are provided with tab portions (4, 6) bent outwardly of the plane of the body and base portions and the upper edges of said tab portions constitute the second engagement means.

11. A fastening device according to claim 10 **characterised in that** the tab portions (4, 6) are bent in the same direction out of the plane of the base and body portions.

12. A fastening device according to claim 10 **characterised in that** the tab portions (4, 6) are bent in opposite directions out of the plane of the base and body portions.

13. A fastening device according to any preceding claim **characterised in that** the lines of contact made between the underside of the rim and the upper edge (36; 38) of the tray (16) and between the upper edges of the base portion (12; 112) and the internal edges of the inwardly extending portions (26, 28) of the channel are substantially parallel.

14. A fastening device according to claim 1 **characterised in that** the thickness of the device (2; 102) is between 0.5-5mm.

15. A fastening device according to claim 14 **characterised in that** the thickness of the device (2; 102) is between 0.6 to 1.2mm.

16. A fastening device according to claim 1 **characterised in that** said device (2; 102) is made from sprung steel.

17. A method of forming a fastening device according to any preceding claim **characterised in that** said device (2; 102) is formed as a planar metal blank and the various portions are deformed outwardly from the planar surface to form the first and second engagement means of the device.

18. A method of attaching a fastening device to a tray according to claim 1 **characterised in that** said device is attached to the channel support (18) by substantially aligning the longitudinal length of the base portion (12; 112) in parallel fashion with the length of the channel support, disposing said base portion (12; 112) within said channel and twisting said device (2; 102) to bring said base portion into substantially perpendicular relationship with the length of said support (18), bending said device over the upper edge (36; 38) of said tray (16) as said second engagement means come into contact with the internal edges of the inwardly extending portions (26,28) of the support channel.

19. A method of attaching a fastening device to a tray according to claim 18 **characterised in that** two fastening devices (2; 102) are used.

20. A method of attaching a tray to channel support means using a fastening device **characterised in that** said fastening device is a unitary member having first and second engagement means located a spaced pre-determined distance apart, and said method includes disposing said second engagement means within said channel, twisting said device to bring said second engagement means into substantially perpendicular relationship with a length of said channel support to contact an internal surface of said channel support and disposing said first engagement means over an upper edge of said tray.

## Patentansprüche

1. Befestigungsvorrichtung (2; 102) zum Befestigen einer Rinne (16) an Tragmitteln (18), wobei die Tragmittel (18) eine Querschnittsform haben, die einen Hohlkanal in den Tragmitteln und auf ihrer Länge definiert, wobei die Tragmittel (18) Abschnitte (26, 28) besitzen, die sich im Kanal einwärts erstrecken, um den Kanal in seinem oberen Bereich teilweise zu verschließen, um **dadurch** erstens einen Schlitz auf der Länge des Trägers zu definieren und um zweitens in dem Kanal Kanten zu schaffen, hinter denen die Vorrichtung in Eingriff gebracht werden kann, wobei die Rinne (16) wenigstens eine Basis (30) aufweist, die mit Seitenwänden (32, 34) verbunden ist, die obere Kanten (36, 38) besitzen, an denen die Vorrichtung (2; 102) befestigt werden kann, **dadurch gekennzeichnet, dass** die Befestigungsvorrichtung (2; 102) eine einteilige Komponente mit ersten und zweiten Eingriffmitteln ist, wobei die ersten Eingriffmittel im Gebrauch über der oberen Kante (36; 38) der Rinne angeordnet sind und die zweiten Eingriffmittel mit den Innenkanten des Kanals in Kontakt sind.

2. Befestigungsvorrichtung nach Anspruch 1, **dadurch gekennzeichnet, dass** die ersten und die zweiten Eingriffmittel voneinander um eine Strecke getrennt sind, die kleiner ist als jene zwischen der oberen Kante (36; 38) der Rinne (18) und der Ebene, die die Innenkanten des Kanals enthält, so dass die Vorrichtung (2; 102) zwischen dem Träger (18) und der oberen Kante (36; 38) der Rinne (16) unter elastischer Verformung der einen und/oder der anderen Eingriffsmittel durch Einrastpassung befestigbar ist.

3. Befestigungsvorrichtung nach Anspruch 2, **dadurch gekennzeichnet, dass** die ersten Eingriffmittel von den zweiten Eingriffmitteln durch einen Körperabschnitt (10; 110), der geringfügig kleiner als die Tiefe der Rinnenseitenwände (32, 34) ist, zuzüglich des Abstands zwischen den oberen Kanten und den Innenkanten der nach innen sich erstreckenden Abschnitte (26, 28) des Trägers (18), mit denen die zweiten Eingriffmittel in Eingriff sind, getrennt sind.

4. Befestigungsvorrichtung nach Anspruch 1, **dadurch gekennzeichnet, dass** die Vorrichtung (2; 102) einen Basisabschnitt (12; 112) und einen Körperabschnitt (10; 110), der sich hiervon nach oben erstreckt und in einem eingerollten Abschnitt (8; 108) endet, der einen Rand definiert, der die ersten Eingriffmittel bildet, unterhalb derer die obere Kante (36; 38) der Rinne (16) befestigt werden kann, umfasst.

5. Befestigungsvorrichtung nach Anspruch 4, **dadurch gekennzeichnet, dass** der Rand der Vorrichtung (2; 102) mit einer Lippe (40; 140) versehen ist.

6. Befestigungsvorrichtung nach Anspruch 4, **dadurch gekennzeichnet, dass** an der Unterseite des Randes wenigstens ein Vorsprung oder Widerhaken (114) vorgesehen ist.

7. Befestigungsvorrichtung nach Anspruch 4, **dadurch gekennzeichnet, dass** der Basisabschnitt (12; 112) eine geringfügig kleinere Breite als der Hohlkanal, in den er eingesetzt ist, besitzt.

8. Befestigungsvorrichtung nach Anspruch 4, **dadurch gekennzeichnet, dass** der Basisabschnitt (12; 112) breiter ist als der Körperabschnitt (10; 110).

9. Befestigungsvorrichtung nach Anspruch 8, **dadurch gekennzeichnet, dass** die oberen Kanten des Basisabschnitts (12; 112), die sich über die Breite des Körperabschnitts (10; 110) hinaus erstrecken, die zweiten Eingriffmittel bilden.

10. Befestigungsvorrichtung nach Anspruch 9, **dadurch gekennzeichnet, dass** die Kanten des Basisabschnitts (12; 112), die sich über die Breite des Körperabschnitts (10; 110) hinaus erstrecken, mit Ansatzabschnitten (4, 6) versehen sind, die aus der Ebene der Körper- und Basisabschnitte nach außen gebogen sind, und die oberen Kanten der Ansatzabschnitte die zweiten Eingriffmittel bilden.

11. Befestigungsvorrichtung nach Anspruch 10, **dadurch gekennzeichnet, dass** die Ansatzabschnitte (4, 6) in derselben Richtung aus der Ebene der Basis- und Körperabschnitte gebogen sind.

12. Befestigungsvorrichtung nach Anspruch 10, **dadurch gekennzeichnet, dass** die Ansatzabschnitte (4, 6) in entgegengesetzten Richtungen aus der Ebene der Basis- und Körperabschnitte gebogen sind.

13. Befestigungsvorrichtung nach einem vorhergehenden Anspruch, **dadurch gekennzeichnet, dass** die Kontaktlinien, die zwischen der Unterseite des Randes und der oberen Kante (36; 38) der Rinne (16) sowie zwischen den oberen Kanten des Basisabschnitts (12; 112) und den Innenkanten der nach innen sich erstreckenden Abschnitte (26, 28) des Kanals gebildet sind, im Wesentlichen parallel sind.

14. Befestigungsvorrichtung nach Anspruch 1, **dadurch gekennzeichnet, dass** die Dicke der Vorrichtung (2; 102) im Bereich von 0,5 bis 5 mm liegt.

15. Befestigungsvorrichtung nach Anspruch 14, **dadurch gekennzeichnet, dass** die Dicke der Vorrichtung (2; 102) im Bereich von 0,6 bis 1,2 mm liegt.

16. Befestigungsvorrichtung nach Anspruch 1, **dadurch gekennzeichnet, dass** die Vorrichtung (2; 102) aus Federstahl hergestellt ist.

17. Verfahren zum Bilden einer Befestigungsvorrichtung nach einem vorhergehenden Anspruch, **dadurch gekennzeichnet, dass** die Vorrichtung (2; 102) aus einem ebenen Metallzuschnitt gebildet ist und die verschiedenen Abschnitte aus der ebenen Oberfläche nach außen verformt sind, um die ersten und die zweiten Eingriffmittel der Vorrichtung zu bilden.

18. Verfahren zum Befestigen einer Befestigungsvorrichtung nach Anspruch 1 an einer Rinne, **dadurch gekennzeichnet, dass** die Vorrichtung an dem Kanalträger (18) **dadurch** befestigt wird, dass die longitudinale Länge des Basisabschnitts (12; 112) im Wesentlichen parallel auf die Länge des Kanalträgers ausgerichtet wird, der Basisabschnitt (12; 112) in dem Kanal angeordnet wird und die Vorrichtung (2; 102) verdreht wird, um den Basisabschnitt in eine im Wesentlichen senkrechte Beziehung zu der Länge des Trägers (18) zu bringen, und die Vorrichtung über die obere Kante (36; 38) der Rinne (16) gebogen wird, wenn die zweiten Eingriffmittel mit den Innenkanten der nach innen sich erstreckenden Abschnitte (26, 28) des Trägerkanals in Kontakt gelangen.

19. Verfahren zum Befestigen einer Befestigungsvorrichtung an einer Rinne nach Anspruch 18, **dadurch gekennzeichnet, dass** zwei Befestigungsvorrichtungen (2; 102) verwendet werden.

20. Verfahren zum Befestigen einer Rinne an Kanalträgermitteln unter Venrvendung einer Befestigungsvorrichtung, **dadurch gekennzeichnet, dass** die Befestigungsvorrichtung ein einteiliges Element mit ersten und zweiten Eingriffmittel ist, die um eine vorgegebene Strecke beabstandet angeordnet sind, wobei das Verfahren das Anordnen der zweiten Eingriffmittel in den Kanal, das Verdrehen der Vorrichtung, um die zweiten Eingriffmittel in eine im Wesentlichen senkrechte Beziehung zu einer Länge des Kanalträgers zu bringen, um einen Kontakt mit einer inneren Oberfläche des Kanalträgers herzustellen, und das Anordnen der ersten Eingriffmittel über eine obere Kante der Rinne umfasst.

## Revendications

1. Dispositif de fixation (2 ; 102) pour fixer un plateau (16) à un moyen de support (18), ledit moyen de support (18) ayant une forme en section transversale définissant un canal creux à l'intérieur dudit moyen de support et le long de sa longueur, ledit moyen de support (18) ayant des portions (26, 28) s'étendant vers l'intérieur dudit canal pour clore partiellement ledit canal dans une région supérieure de celui-ci, ce qui tout d'abord définit une fente le long de la longueur dudit support et deuxièmement fournit des bords à l'intérieur dudit canal derrière lesquels ledit dispositif peut être mis en prise, ledit plateau (16) comprenant au moins une base (30) connectée à des parois latérales (32, 34) ayant des bords supérieurs (36, 38) auxquels ledit dispositif (2, 102) peut être fixé, ledit dispositif de fixation (2, 102) étant **caractérisé en ce qu'**il est un composant unitaire ayant des premier et second moyens de mise en prise, le premier moyen de mise en prise, lors de l'utilisation, étant disposé sur le bord supérieur (36, 38) dudit plateau et ledit second moyen de mise en prise entrant en contact avec les bords intérieurs dudit canal.

2. Dispositif de fixation suivant la revendication 1, **caractérisé en ce que** les premier et second moyens de mise en prise sont séparés l'un de l'autre d'une distance inférieure à la distance entre le bord supérieur (36 ; 38) du plateau (16) et le plan contenant les bords intérieurs du canal, de telle sorte que le dispositif (2 ; 102) soit adaptable par enclenchement entre le support (18) et le bord supérieur (36 ; 38) du plateau (16) avec une déformation élastique de l'un et/ou de l'autre desdits moyens de mise en prise.

3. Dispositif de fixation suivant la revendication 2, **caractérisé en ce que** le premier moyen de mise en prise est séparé du second moyen de mise en prise par une portion de corps (10 ; 110) qui est à peine inférieure à la profondeur des parois latérales (32, 34) du plateau plus la distance entre les bords supérieurs et les bords intérieurs des portions s'étendant vers l'intérieur (26, 28) du support (18) avec lesquels le second moyen de mise en prise s'engage.

4. Dispositif de fixation suivant la revendication 1, **caractérisé en ce que** le dispositif (2 ; 102) comprend une portion de base (12 ; 112) et une portion de corps (10 ; 110) qui s'étend vers le haut à partir de celle-ci et qui se termine par une portion ondulée (8 ; 108) définissant un rebord constituant le premier moyen de mise en prise au-dessous duquel le bord supérieur (36 ; 38) du plateau (16) peut être fixé.

5. Dispositif de fixation suivant la revendication 4, **caractérisé en ce que** le rebord du dispositif (2 ; 102) est muni d'une lèvre (40 ; 140).

6. Dispositif de fixation suivant la revendication 4, **caractérisé en ce qu'**au moins une protubérance ou un barbillon (114) est présent sur la face inférieure du rebord.

7. Dispositif de fixation suivant la revendication 4, **caractérisé en ce que** la portion de base (12 ; 112) a une largeur à peine inférieure à celle du canal creux dans lequel elle est insérée.

8. Dispositif de fixation suivant la revendication 4, **caractérisé en ce que** la portion de base (12 ; 112) est plus large que la portion de corps (10 ; 110).

9. Dispositif de fixation suivant la revendication 8, **caractérisé en ce que** les bords supérieurs de la portion de base (12 ; 112) s'étendant au-delà de la largeur de la portion de corps (10 ; 110) constituent le second moyen de mise en prise.

10. Dispositif de fixation suivant la revendication 9, **caractérisé en ce que** les bords de la portion de base (12 ; 112) s'étendant au-delà de la largeur de la portion de corps (10 ; 110) sont munis de portions en forme de pattes (4, 6) fléchies vers l'extérieur du plan du corps et les portions de base et les bords supérieurs desdites portions en forme de pattes constituent le second moyen de mise en prise.

11. Dispositif de fixation suivant la revendication 10, **caractérisé en ce que** les portions en forme de pattes (4, 6) sont fléchies dans la même direction hors du plan des portions de base et de corps.

12. Dispositif de fixation suivant la revendication 10, **caractérisé en ce que** les portions en forme de pattes (4, 6) sont fléchies dans des directions opposées hors du plan des portions de base et de corps.

13. Dispositif de fixation suivant l'une quelconque des revendications précédentes, **caractérisé en ce que** les lignes de contact réalisées entre la face inférieure du rebord et le bord supérieur (36 ; 38) du plateau (16) et entre les bords supérieurs de la portion de base (12 ; 112) et les bords intérieurs des portions s'étendant vers l'intérieur (26, 28) du canal sont substantiellement parallèles.

14. Dispositif de fixation suivant la revendication 1, **caractérisé en ce que** l'épaisseur du dispositif (2 ; 102) est comprise entre 0,5 et 5 mm.

15. Dispositif de fixation suivant la revendication 14, **caractérisé en ce que** l'épaisseur du dispositif (2 ; 102) est comprise entre 0,6 et 1,2 mm.

16. Dispositif de fixation suivant la revendication 1, **caractérisé en ce que** ledit dispositif (2 ; 102) est constitué d'acier à ressort.

17. Procédé pour former un dispositif de fixation suivant l'une quelconque des revendications précédentes, **caractérisé en ce que** ledit dispositif (2 ; 102) est formé d'une ébauche métallique plane et les diverses portions sont déformées vers l'extérieur à partir de la surface plane pour former les premier et second moyens de mise en prise du dispositif.

18. Procédé pour la fixation d'un dispositif de fixation à un plateau suivant la revendication 1, **caractérisé en ce que** ledit dispositif est fixé au support à canal (18) en alignant substantiellement la longueur longitudinale de la portion de base (12 ; 112) parallèlement à la longueur du support à canal, en disposant ladite portion de base (12 ; 112) à l'intérieur dudit canal et en soumettant à un mouvement de torsion ledit dispositif (2 ; 102) pour mettre ladite portion de base en relation substantiellement perpendiculaire avec la longueur dudit support (18), en fléchissant ledit dispositif sur le bord supérieur (36, 38) dudit plateau (16) lorsque ledit second moyen de mise en prise vient en contact avec les bords intérieurs des portions s'étendant vers l'intérieur (26, 28) du canal de support.

19. Procédé pour la fixation d'un dispositif de fixation à un plateau suivant la revendication 18, **caractérisé en ce que** deux dispositifs de fixation (2 ; 102) sont utilisés.

20. Procédé pour la fixation d'un plateau à un moyen de support à canal en utilisant un dispositif de fixation, **caractérisé en ce que** ledit dispositif de fixation est un élément unitaire ayant des premier et second moyens de mise en prise situés à une distance prédéterminée l'un de l'autre, et ledit procédé comprend les étapes consistant à disposer ledit second moyen de mise en prise à l'intérieur dudit canal, à soumettre à un mouvement de torsion ledit dispositif pour mettre ledit second moyen de mise en prise en relation substantiellement perpendiculaire avec une longueur dudit support à canal pour la mise en contact d'une surface intérieure dudit support à canal et à disposer ledit premier moyen de mise en prise sur un bord supérieur dudit plateau.
